# FASCICULE DE BREVET EUROPEEN

(11) **EP 2 397 427 B1**
(45) Date de publication et mention de la délivrance du brevet: **28.08.2013**
(21) Numéro de dépôt: 11170270.0
(22) Date de dépôt: 17.06.2011
(51) Int. Cl.: B65G 51/06

(54) **Cartouche de convoyage pneumatique, comportant un réceptacle muni d'une fenêtre latérale et procédé**
Kasten zur pneumatischen Beförderung, der einen mit einem Seitenfenster ausgestatteten Behälter umfasst, und Verfahren
Pneumatic conveying cartridge including a receptacle equipped with a side window and method

(30) Priorité: 21.06.2010 FR 1054895
(43) Date de publication de la demande: 21.12.2011
(73) Titulaire: Snef, 13015 Marseille (FR)
(72) Inventeur: Renoux, Frédéric, 06200 NICE (FR); Gatto, Dominique, 06200 NICE (FR)
(74) Mandataire: Decobert, Jean-Pascal

(56) Documents cités:
- DE-B- 1 258 350
- DE-U1- 7 609 505
- GB-A- 377 855
- SU-A1- 727 539
- US-A- 1 898 860
- US-A- 1 993 194

## Description

L'invention est du domaine des techniques de convoyage pneumatique exploitant un conteneur, ou cartouche, recevant des objets pour leur livraison par tube à partir de l'écoulement d'un fluide. Elle a pour objet une telle cartouche de convoyage pneumatique agencée pour sécuriser l'accès à son contenu, valeurs bancaires notamment ainsi qu'un procédé de mise en oeuvre de la cartouche.

Le convoyage pneumatique est utilisé pour le transport d'objets par l'intermédiaire d'une installation tubulaire qui exploite l'écoulement d'un fluide pour déplacer une cartouche à l'intérieur de l'installation. La cartouche est préalablement remplie des objets à transporter puis est introduite à l'intérieur de l'installation à un poste d'expédition, pour son convoyage vers un poste de livraison déterminé. Une application du convoyage pneumatique réside dans le transport et la livraison de valeurs bancaires agencées en feuilles, telles que des billets de banque, des chèques bancaires ou des documents par exemple. De telles modalités de convoyage présentent l'avantage de sécuriser le transport et la livraison des valeurs bancaires.

Se pose le problème général du remplissage de la cartouche et de la sécurisation de l'accès à son contenu. Idéalement, l'accès au contenu de la cartouche doit être sécurisé depuis son remplissage en valeurs bancaires jusqu'à sa vidange par un personnel autorisé au poste de livraison. Une telle démarche implique un agencement spécifique de la cartouche pour procurer sa sécurisation à l'encontre d'un accès par un personnel non autorisé, et néanmoins pour permettre sa manutention aisée pour son remplissage et sa vidange.

Couramment, les cartouches sont de conformation générale cylindrique pour faciliter leur circulation à l'intérieur de l'installation tubulaire. Plus particulièrement, les cartouches comprennent un corps globalement cylindrique qui forme un réceptacle des objets à contenir. Ce réceptacle est pourvu à chacune de ses extrémités axiales d'embouts respectifs, qui présentent une zone de section complémentaire à celle des tubes de l'installation pour permettre une circulation étanche de la cartouche sous l'effet d'une poussée exercée par l'écoulement du fluide. Pour un chargement confortable de la cartouche par un opérateur, il est connu de ménager à travers la paroi du réceptacle une fenêtre latérale d'accès à son volume intérieur. Le réceptacle est équipé d'un organe d'obturation agencé en trappe ou analogue, qui est articulé sur le réceptacle pour alternativement obturer la fenêtre en position de fermeture de la cartouche ou inversement libérer la fenêtre en position d'ouverture de la cartouche. En position d'ouverture, la trappe est basculée vers l'extérieur de la cartouche pour dégager la fenêtre, et le remplissage en objets de la cartouche peut être confortablement opéré. En position de fermeture, la trappe est rabattue vers la fenêtre et est bloquée par un mécanisme de verrouillage en position de fermeture, pour permettre son convoyage à travers l'installation. On pourra par exemple se reporter aux documents US-A-3189297 et US-A-4465410 qui décrivent de telles cartouches et installations de convoyage pneumatique.

Dans le cadre d'un convoyage pneumatique de valeurs bancaires, celles-ci sont manipulées par un opérateur pour être introduites à l'intérieur de la cartouche de convoyage. La cartouche étant remplie, l'opérateur manoeuvre l'organe d'obturation de la fenêtre latérale que comporte la cartouche pour confiner son contenu et pour permettre à la cartouche de circuler à l'intérieur de l'installation tubulaire de convoyage. La cartouche est ensuite convoyée vers le poste de livraison et renvoyée vers l'opérateur à travers l'installation, pour renouveler son remplissage. Il est apparu à l'usage que l'ergonomie et la sécurisation de la cartouche à l'encontre d'un accès non autorisé méritaient d'être améliorés.

On connaît du document GB - A - 377 855 une cartouche pour convoyage pneumatique correspondant au préambule de la revendication 1 dans laquelle deux parties constitutives peuvent être bloquées en position relative en rotation grâce à un dispositif de blocage.

Le but de la présente invention est de proposer une cartouche de convoyage pneumatique qui soit commode d'utilisation pour son ouverture et sa fermeture notamment, et dont l'accès à son contenu soit néanmoins sécurisé depuis son remplissage jusqu'à sa livraison auprès d'un opérateur autorisé à ouvrir la cartouche.

La présente invention a pour objets une cartouche de convoyage pneumatique d'objets telle que revendiquée dans la revendication 1. Une telle cartouche est axialement étendue et comporte à ses extrémités des embouts qui délimitent l'encombrement transversal hors tout de la cartouche, pour permettre sa propulsion par poussée à l'intérieur d'une installation tubulaire sous l'effet de l'écoulement d'un fluide. De tels embouts sont avantageusement munis de joints périphériques de glissement à l'intérieur des tubes de l'installation, et sont disposés aux extrémités respectives de la cartouche pour procurer des appuis distants favorisant le guidage de la cartouche lors de son convoyage. La cartouche comprend un corps tubulaire qui ménage un réceptacle des objets à convoyer. Ce réceptacle est muni d'une première fenêtre latérale d'accès à son volume intérieur, pour permettre l'introduction et le retrait des objets à convoyer respectivement à l'intérieur et hors du réceptacle. La cartouche comporte un organe d'obturation et des moyens de manoeuvre qui procurent son changement d'état entre une position d'ouverture et inversement une position de fermeture. En position d'ouverture de la cartouche, le volume intérieur du réceptacle est accessible à travers la première fenêtre pour l'introduction et le retrait des objets à convoyer. En position de fermeture, le volume intérieur du réceptacle est confiné à partir d'une obturation de la première fenêtre par l'organe d'obturation. L'accès au volume intérieur du réceptacle est réalisé par dégagement de la première fenêtre en position d'ouverture de la cartouche, tandis que le confinement du volume intérieur du réceptacle est réalisé par obturation de la première fenêtre en position de fermeture de la cartouche par l'organe d'obturation.

Une telle cartouche de la présente invention est principalement reconnaissable en ce que le réceptacle est logé axialement tournant à l'intérieur d'une enceinte coaxiale qui forme une paroi extérieure de la cartouche et qui est munie d'une deuxième fenêtre latérale d'accès au volume intérieur du réceptacle. Le dit organe d'obturation est notamment formé par une portion de paroi de la dite enceinte, qui est alternativement placé en superposition de la première fenêtre latérale en position de fermeture de la cartouche, cette superposition étant escamotée en faveur d'une superposition de la deuxième fenêtre latérale sur la première fenêtre latérale en position d'ouverture de la cartouche.

La cartouche associe deux conteneurs qui sont montés coaxiaux et mobiles en rotation l'un par rapport à l'autre pour placer la cartouche alternativement en position de fermeture pour son convoyage, et en position d'ouverture pour son remplissage et sa vidange. Un premier conteneur constitue ladite enceinte qui forme la paroi extérieure de la cartouche en étant notamment munie des embouts de guidage de la cartouche à l'intérieur de l'installation de convoyage. L'enceinte loge un deuxième conteneur qui constitue le réceptacle des objets à convoyer, ce deuxième conteneur étant monté tournant à l'intérieur du premier conteneur pour permettre une mobilité relative en rotation de l'enceinte et du réceptacle l'un vis-à-vis de l'autre. En position d'ouverture de la cartouche, l'accès au volume intérieur du réceptacle est obtenu à travers la première fenêtre et la deuxième fenêtre qui sont placées en superposition. En position de fermeture de la cartouche, la paroi de l'enceinte forme l'organe d'obturation de la première fenêtre latérale, dans une portion de surface correspondante à la mise en superposition de la paroi de l'enceinte en regard de la première fenêtre. Le passage de l'une à l'autre des positions d'ouverture et/ou de fermeture de la cartouche est obtenu à partir d'un déplacement tournant de l'enceinte et du réceptacle l'un par rapport à l'autre, selon une variation angulaire dépendante de l'étendue circonférentielle de la première fenêtre. A titre indicatif, une telle variation angulaire est souhaitée de l'ordre de 90° pour faciliter la manoeuvre de la cartouche entre ses positions d'ouverture et de fermeture.

Le passage de la cartouche de l'une à l'autre des positions d'ouverture et/ou de fermeture est susceptible d'être réalisé aisément à partir d'une mise en rotation relative entre l'enceinte et le réceptacle, sans néanmoins faire obstacle à l'intégration dans la cartouche de moyens de sécurisation visant à limiter l'accès de son contenu par un personnel autorisé, notamment à partir d'un verrouillage en position radiale relative du réceptacle et de l'enceinte l'un par rapport à l'autre. L'encombrement hors tout de la cartouche est constant quelles que soient ses positions d'ouverture ou de fermeture, ce qui facilite sa manipulation voire sa manutention par une installation automatisée, telle qu'une installation organisée pour son remplissage en objets, valeurs bancaires conformés en feuilles notamment.

Les moyens de manoeuvre de la cartouche sont plus particulièrement des moyens de mise en rotation et de positionnement relatif du réceptacle et de l'enceinte l'un par rapport à l'autre. Une telle mise en rotation est réalisée entre deux positions stables qui correspondent respectivement aux positions de fermeture et d'ouverture de la cartouche. Plus précisément, la première fenêtre latérale et de la deuxième fenêtre latérales sont déplaçables l'une par rapport à l'autre entre une position de mise en regard qui correspond à la position d'ouverture de la cartouche et une position de décalage angulaire adapté qui correspond à la position de fermeture de la cartouche. La cartouche est munie de moyens de maintien stable en chacune de ses positions d'ouverture et de fermeture, qui sont agencés en mécanismes de verrouillage notamment.

La mise en rotation et le positionnement du réceptacle et de l'enceinte l'un par rapport à l'autre est susceptible de résulter d'une immobilisation du réceptacle et d'une manoeuvre en rotation de l'enceinte, d'une immobilisation de l'enceinte et d'une manoeuvre en rotation du réceptacle, ou encore d'une manoeuvre en rotation combinée entre l'enceinte et le réceptacle. De telles facultés de manoeuvre de la cartouche facilitent ses potentialités de manutention par une installation automatisée.

Selon une variante préférée de réalisation permettant de simplifier la structure de la cartouche sans faire obstacle à sa manutention par une installation notamment destinée à son remplissage en objets, le réceptacle est manoeuvrable en rotation à l'intérieur de l'enceinte immobilisée entre les positions d'ouverture et de fermeture de la cartouche. A cet effet, des moyens d'assistance mécanique sont exploités pour provoquer spontanément l'entraînement du réceptacle au moins vers sa position de fermeture. L'entraînement spontané du réceptacle en position de fermeture de la cartouche permet de privilégier cette position par défaut, pour sécuriser la cartouche à l'encontre d'un accès au contenu du réceptacle.

Selon une forme préférée de réalisation des moyens de manoeuvre de la cartouche, ceux-ci comprennent des moyens d'entraînement en rotation spontané du réceptacle en position de fermeture, et des moyens d'entraînement en rotation volontaire du réceptacle par un opérateur en position d'ouverture de la cartouche. Tel que visé plus haut et de manière analogue, de tels moyens d'entraînement sont susceptibles d'être inversés en étant appliqués à l'enceinte à partir d'une immobilisation du réceptacle.

Selon une forme avantageuse de réalisation, les moyens d'entraînement spontané du réceptacle en position de fermeture de la cartouche comprennent au moins un organe principal élastiquement déformable qui est en prise sur l'enceinte et sur le réceptacle entre lesquels il est interposé. A titre d'exemple, un tel organe principal à déformation élastique est constitué d'un ressort de torsion, dont la mise sous tension est imprimée par le passage de la cartouche en position d'ouverture, et dont la libération, provoquant son retour spontané en position naturelle, résulte d'une libération du réceptacle vis-à-vis de l'enceinte.

La cartouche est avantageusement équipée de moyens de retenue du réceptacle en position d'ouverture de la cartouche, à l'encontre de son entraînement spontané en position de fermeture de la cartouche, pour stabiliser la mise en position d'ouverture de la cartouche.

Selon une forme avantageuse de réalisation des moyens d'entraînement volontaire du réceptacle en position d'ouverture de la cartouche, ceux-ci comprennent une serrure de manoeuvre d'un loquet qui est en prise sur l'enceinte et qui coopère avec une gâche en prise sur le réceptacle. L'agencement structurel de la serrure en elle-même est indifférent, celle-ci pouvant par exemple être une serrure à commande mécanique associant un canon et une clé adaptée à ergots amovible, ou encore une serrure à commande électronique et/ou à commande par ondes mettant en oeuvre des organes distants de commande de la mise en oeuvre de la serrure.

Les moyens d'entraînement spontané du réceptacle sont agencés en moyens d'assistance mécanique simple-effet qui sont avantageusement intégrés à la cartouche. De tels moyens sont des moyens autonomes provoquant spontanément le passage de la cartouche en position de fermeture, notamment à partir d'un entraînement spontané du réceptacle en rotation jusqu'à une position angulaire prédéfinie. Inversement, le réceptacle est volontairement manoeuvrable par un opérateur en position d'ouverture de la cartouche, à l'encontre des efforts antagonistes exercés par son entraînement spontané en position de fermeture de la cartouche. La position par défaut de la cartouche est celle correspondante à sa position de fermeture, pour sécuriser l'accès à son contenu qui est rendu possible par un personnel autorisé seulement. Pour placer la cartouche en position d'ouverture, il est nécessaire de disposer de moyens spécifiques s'opposant à l'entraînement spontané du réceptacle, comprenant notamment un organe qui est manoeuvrable par une personne autorisée seulement et qui est agencé en une dite serrure. Les dits moyens de retenue permettent de maintenir la cartouche dans une position stable d'ouverture pour permettre un accès au volume intérieur du réceptacle par un quelconque opérateur, en vue de son remplissage notamment. Le réceptacle étant rempli, une manoeuvre des moyens d'entraînement spontané du réceptacle en position de fermeture de la cartouche interdit alors tout accès à son contenu.

La cartouche est de préférence équipée de moyens de positionnement et de blocage relatifs entre le réceptacle et l'enceinte en chacune des positions d'ouverture et de fermeture de la cartouche, de sorte que la cartouche soit maintenue stable en position d'ouverture pour permettre son remplissage aisé, et en position de fermeture pour interdire un accès non autorisé au contenu de la cartouche. Les moyens de positionnement et de blocage sont des moyens d'interdiction d'une manoeuvre relative en rotation entre le réceptacle et l'enceinte, qui perdure en l'absence d'une rupture de l'effet de blocage volontairement effectuée par un opérateur. Plus particulièrement, un quelconque opérateur est apte à rompre le blocage de la cartouche en position d'ouverture pour son passage spontané en position de fermeture, tandis que seul un opérateur autorisé est apte à rompre le blocage de la cartouche en position de fermeture pour son passage volontaire en position d'ouverture.

Selon une forme préférée de réalisation des dits moyens de positionnement et de blocage, ceux-ci sont du type par brochage pour éviter un accroissement inopportun de l'encombrement de la cartouche et une complexification de sa structure. Les moyens de positionnement et de blocage comprennent au moins un ensemble de verrouillage, qui associe notamment un doigt de brochage ou organe analogue qui coopère avec un logement pour sa réception. Le doigt de brochage et le logement sont respectivement ménagés indifféremment sur le réceptacle et sur l'enceinte, et une mise en coopération entre le doigt de brochage et le logement induit une immobilisation relative en rotation entre le réceptacle et l'enceinte dans une position prédéterminée.

Plus particulièrement, le doigt de brochage est manoeuvrable entre une position spontanée de blocage et une position volontaire de déblocage par un opérateur. En position de blocage, le doigt de brochage est engagé spontanément à l'intérieur du logement, au moyen d'un organe secondaire élastiquement déformable notamment. En position de déblocage, le doigt de brochage est placé hors du logement à partir d'un geste effectué par un opérateur.

Selon une forme préférée de réalisation, un ensemble de verrouillage est respectivement ménagé pour chacune des positions d'ouverture et de fermeture de la cartouche. Plus particulièrement, les moyens de positionnement et de blocage comprennent un premier ensemble de verrouillage pour le maintien de la cartouche en position d'ouverture et un deuxième ensemble de verrouillage pour le maintien de la cartouche en position de fermeture. Chacun de ces premier et deuxième ensembles de verrouillage sont avantageusement de structure analogue, en mettant en oeuvre un doigt de brochage coopérant avec un logement qui lui est affecté et à l'intérieur duquel il est spontanément maintenu en position de blocage au moyen d'un organe secondaire élastiquement déformable.

Plus particulièrement, la cartouche est équipée d'un premier ensemble de verrouillage qui constitue les dits moyens de retenue. Ce premier ensemble de verrouillage comprend un premier doigt de brochage qui est en prise sur le réceptacle, et un premier logement que comporte l'enceinte. Un premier organe secondaire à déformation élastique est interposé entre le premier doigt de brochage et le réceptacle, et provoque un passage spontané du premier doigt de brochage vers la position de blocage en position d'ouverture de la cartouche. Le premier doigt de brochage est avantageusement accessible depuis l'extérieur de la cartouche, sa manoeuvre en position de déblocage étant réalisée volontairement par un opérateur par poussée, à l'encontre d'un effort axial appliqué par le premier organe secondaire à déformation élastique sur le premier doigt de brochage.

Plus particulièrement encore, la cartouche est équipée d'un deuxième ensemble de verrouillage comprenant un deuxième doigt de brochage qui est en prise sur le réceptacle, et un deuxième logement que comporte l'enceinte. Un deuxième organe secondaire à déformation élastique est interposé entre le deuxième doigt de brochage et le réceptacle, et provoque un passage spontané du deuxième doigt de brochage vers la position de blocage en position de fermeture de la cartouche. Le deuxième doigt de brochage est manoeuvrable par la serrure vers la position de déblocage, à l'encontre d'un effort axial appliqué par le deuxième organe secondaire à déformation élastique sur le deuxième doigt de brochage. La manoeuvre du deuxième doigt de brochage par la serrure correspond notamment à une traction exercée par le loquet sur le deuxième organe secondaire élastiquement déformable, qui induit sa déformation et la libération du deuxième doigt de brochage vis-à-vis d'une poussée antagoniste que prend spontanément le deuxième organe secondaire élastiquement déformable contre le deuxième doigt de brochage.

L'enceinte comporte à chacune de ses extrémités axiales des embouts respectifs de guidage de la cartouche à l'intérieur de l'installation tubulaire de convoyage. Ces embouts reçoivent avantageusement les extrémités correspondantes du réceptacle en rotation libre, et logent les moyens de manoeuvre de la cartouche.

De préférence, la serrure et l'organe principal à déformation élastique sont logés dans le volume délimité par un embout respectif en étant disposés coaxiaux à la cartouche. Ces dispositions permettent de répartir deux organes majeurs et encombrants exploités pour la manoeuvre de la cartouche entre ses positions d'ouverture et de fermeture, axialement à chacune de ses extrémités. Le premier ensemble de verrouillage est situé dans l'embout logeant l'organe à déformation élastique, tandis que le deuxième ensemble de verrouillage est situé dans l'embout logeant la serrure. La scission des moyens de positionnement et de blocage en deux ensembles distincts de verrouillage autorise leur répartition de l'un à l'autre des embouts pour éviter d'accroître l'encombrement de la cartouche et pour faciliter l'éventuelle manutention de la cartouche par une installation automatisée notamment destinée à son remplissage en objets à convoyer.

Selon un procédé de mise en oeuvre d'une cartouche de convoyage pneumatique d'objets telle qu'il vient d'être décrit, celui-ci consiste dans sa généralité à libérer l'accès au volume intérieur du réceptacle et inversement à confiner le volume intérieur du réceptacle, à partir d'une manoeuvre en rotation coaxiale de l'un quelconque au moins du réceptacle et de l'enceinte l'un par rapport à l'autre.

Un entraînement du réceptacle en rotation est avantageusement spontanément provoqué depuis la position d'ouverture vers la position de fermeture de la cartouche, au moyen de l'organe principal à déformation élastique. Un tel entraînement spontané est obtenu à partir d'une manoeuvre du premier doigt de brochage depuis la position de blocage vers la position de déblocage, qui est avantageusement réalisable volontairement par un quelconque opérateur.

Un entraînement du réceptacle en rotation depuis la position de fermeture vers la position d'ouverture de la cartouche est avantageusement réalisé au moyen de la serrure. Plus particulièrement, le déplacement du loquet provoque le passage du deuxième doigt de brochage depuis la position de blocage vers la position de déblocage, notamment à partir d'une traction exercée par le loquet sur le deuxième organe secondaire élastiquement déformable à l'encontre d'une poussée axiale qu'il exerce contre le deuxième doigt de blocage. La manoeuvre du loquet par la serrure provoque en outre un entraînement du réceptacle en rotation à partir de l'appui que prend le loquet sur la gâche.

Le procédé d'après la revendication 12 met en oeuvre une combinaison spécifique d'opérations pour sécuriser l'accès au contenu de la cartouche, qui consiste :
- à bloquer en position stable le réceptacle à l'intérieur de l'enceinte en chacune des positions d'ouverture et de fermeture de la cartouche, et
- à provoquer une rupture volontaire de ces blocages, respectivement par un quelconque opérateur pour libérer l'organe principal à déformation élastique provoquant spontanément le passage de la cartouche en position de fermeture, et par un opérateur autorisé par l'intermédiaire de la serrure pour entraîner le réceptacle vers la position d'ouverture de la cartouche.

Les dessins ci-joints sont donnés à titre d'exemples et ne sont pas limitatifs de l'invention. Ils représentent seulement un mode de réalisation de l'invention et permettront de la comprendre aisément.

Un exemple de réalisation de la présente invention va être décrit en relation avec les figures des planches annexées, dans lesquelles :
La figure 1 est une illustration en vue coupe axiale partielle d'une forme préférée de réalisation d'une cartouche de convoyage pneumatique de la présente invention.
Les figures 2 à 5 sont des schémas qui illustrent successivement des étapes de mise en oeuvre de la cartouche représentée sur la figure 1, selon des vues de chacun de ses bouts respectivement réparties en schémas a) et en schémas b).

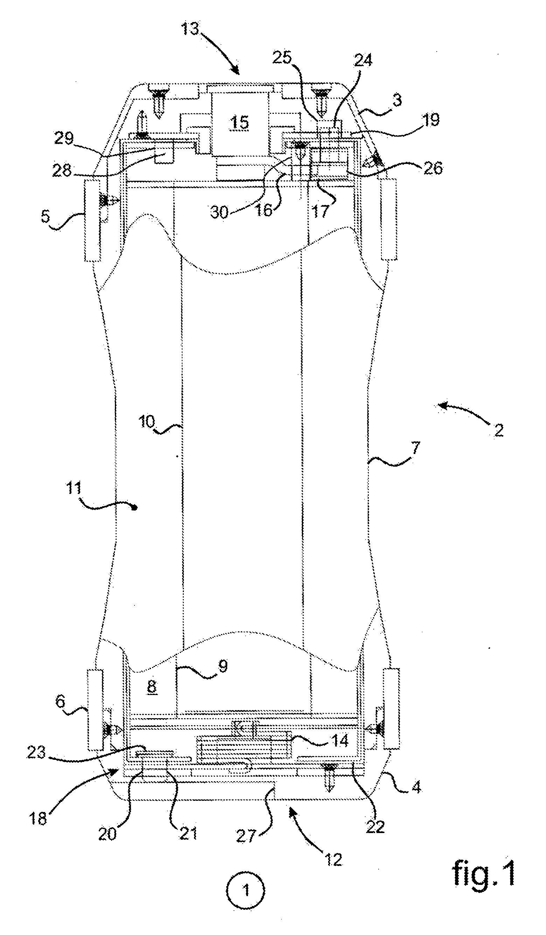

Sur la figure 1, une cartouche 1 de convoyage pneumatique est de conformation globale cylindrique pour être propulsée par écoulement d'un fluide à l'intérieur d'une installation tubulaire de convoyage pneumatique. Cette cartouche 1 est destinée à recevoir des objets à transporter à travers l'installation de convoyage, et est organisée d'une part pour sécuriser l'accès à son contenu vis-à-vis d'une personne indélicate, et d'autre part pour permettre sa manutention aisée par une installation automatisée, notamment pour son remplissage en objets.

La cartouche 1 comprend un corps 2 qui est muni à chacune de ses extrémités d'embouts respectifs 3,4 délimitant son volume périphérique hors tout. Ces embouts 3,4 sont agencés en coiffe des extrémités du corps sur lequel ils sont rapportés, tel qu'au moyen d'organes de fixation, par emboîtement préférentiellement irréversible et/ou par scellement. Pour faciliter son passage dans des zones coudées des tubes de l'installation, le corps 2 est de préférence axialement cintré dans sa zone médiane. Les embouts 3,4 sont chacun équipés de joints périphériques 5,6 procurant un glissement étanche de la cartouche 1 le long des tubes de l'installation de convoyage. De tels joints sont par exemple formés à partir d'une toile à bouclettes ou analogue qui entourent les embouts 3,4 à leur périphérie. L'un quelconque au moins des embouts comporte un relief extérieur 27 apte à coopérer avec un relief complémentaire pour former un détrompeur. Un tel relief complémentaire est susceptible d'être ménagé sur un organe de réception de la cartouche 1 que comporte une installation pour la manutention de la cartouche 1. Un tel relief extérieur 25 est destiné à permettre une mise en prise de la cartouche sur l'organe de réception en une position déterminée, notamment une position de remplissage automatisée de la cartouche.

Le corps 2 que comprend la cartouche 1 est composé deux conteneurs coaxiaux. Un premier conteneur constitue une enceinte 7 en ménageant la paroi extérieure de la cartouche 1. Ce premier conteneur est par exemple obtenu par moulage et/ou usinage d'un matériau plastique, et reçoit les embouts 3,4. L'enceinte 7 loge de manière tournante un deuxième conteneur, qui constitue un réceptacle 8 de réception des objets à convoyer. Ce réceptacle 8 est notamment en métal et plus particulièrement en acier inoxydable. Le réceptacle 8 est monté de manière tournante à l'intérieur de l'enceinte 7, par l'intermédiaire de deux paliers en matériau plastique recevant ses extrémités pour favoriser son guidage et sa mobilité tournante à l'intérieur de l'enceinte 7. Pour permettre un accès au volume intérieur du réceptacle 8 en vue de son remplissage et de sa vidange, celui-ci comporte une première fenêtre latérale 9 ménageant un passage à son travers. L'enceinte 7 étant disposée autour du réceptacle 8, celle-ci comporte une deuxième fenêtre latérale 10 prévue pour être placée en superposition sur la première fenêtre latérale 9 en position d'ouverture de la cartouche. Une portion de la paroi de l'enceinte 7 est exploitée pour former un organe d'obturation 11 de la première fenêtre latérale 9 en position de fermeture de la cartouche 1, à partir d'un déplacement relatif en rotation entre l'enceinte 7 et le réceptacle 8. L'extension de ladite portion de paroi est déterminée en correspondance avec l'extension de surface de la première fenêtre latérale 9. Le dit déplacement relatif induit une mise en décalage angulaire des fenêtres latérales 9,10 l'une par rapport à l'autre, a titre indicatif de l'ordre de 90°. A partir d'une mise en rotation du réceptacle 8 par rapport à la cartouche, soit les fenêtres latérales 9,10 sont placées en superposition en position d'ouverture de la cartouche 1 pour permettre un accès au volume intérieur du réceptacle 8 depuis l'extérieur de la cartouche 1, soit l'organe d'obturation 11 est placé en superposition de la première fenêtre latérale 9 pour interdire un tel accès. Les positions relatives de l'organe d'obturation 11 par rapport à la première fenêtre latérale 9 en position respective de fermeture et d'ouverture de la cartouche sont obtenues à partir d'un déplacement relatif entre l'enceinte 7 et le réceptacle 8, notamment provoqué à partir d'une mise en rotation du réceptacle 8 à l'intérieur de l'enceinte 7.

La cartouche 1 est équipée de moyens de manoeuvre 12,13 pour provoquer son changement d'état entre sa position d'ouverture dans laquelle la première fenêtre latérale 9 et la deuxième fenêtre latérale 10 sont placées en superposition, et sa position de fermeture dans laquelle l'organe d'obturation 11 est placé en superposition sur la première fenêtre latérale 9 pour interdire un accès au volume intérieur du réceptacle 8. Les moyens de manoeuvre 12,13 de la cartouche 1 sont subdivisés en deux moyens d'entraînement distincts qui sont logés dans l'espace délimité respectivement par les embouts 3,4. Un premier moyen d'entraînement 12 est un moyen d'entraînement spontané du réceptacle 8 en position de fermeture de la cartouche 1, qui mettent en oeuvre un organe principal à déformation élastique 14 interposé entre l'enceinte 7 et le réceptacle 8. Un tel organe à déformation élastique 14 est notamment constitué d'un ressort de torsion qui est en prise à ses extrémités respectives sur le réceptacle 8 et sur l'enceinte 7. La mise sous tension de l'organe principal à déformation élastique est provoquée à partir de l'entraînement en rotation du réceptacle 8 en position d'ouverture de la cartouche 1 . Le réceptacle 8 est spontanément entraîné en rotation en position de fermeture de la cartouche 1, de sorte que l'accès au volume intérieur du réceptacle 8 est naturellement interdit par défaut. Pour placer la cartouche 1 en position d'ouverture, celle-ci est équipée d'un deuxième moyen d'entraînement volontaire 13 du réceptacle 8 par un opérateur. Un tel moyen d'entraînement volontaire 13 comprend de préférence une serrure 15 qui conditionne l'ouverture de la cartouche 1 à l'utilisation d'une clé spécifique apte à coopérer avec la serrure 15. La serrure 15 est en prise sur un loquet 16 qui est coopérant avec une gâche 17 solidaire du réceptacle 8. Une manoeuvre de la serrure 15 induit un déplacement en rotation du loquet 16, qui provoque un entraînement en rotation du réceptacle 8 à partir de la poussée exercée par le loquet 16 contre la gâche 17.

Pour permettre un blocage de la cartouche 1 en des positions stables d'ouverture et d'ouverture, celle-ci est équipée d'un couple d'ensembles de verrouillage 18,19. Un premier ensemble de verrouillage 18 est affecté au blocage de la cartouche 1 en position de fermeture, et est manoeuvrable par un quelconque opérateur pour libérer l'organe principal à déformation élastique 14 de sa mise sous tension, afin de provoquer l'entraînement spontané du réceptacle 8 en position de fermeture de la cartouche 1. Un deuxième ensemble de verrouillage 19 permet de maintenir la cartouche 1 en position de fermeture pour permettre son remplissage par un quelconque opérateur autorisé à manoeuvrer la serrure 15, après sa vidange préalablement effectuée.

Le premier ensemble de verrouillage 18 constitue des moyens de retenue à l'encontre de la manoeuvre spontanée du réceptacle 8 vers la position de fermeture de la cartouche 1. Ce premier ensemble de verrouillage 18 associe un premier doigt de brochage 20 coopérant avec un premier logement 21 que comporte l'enceinte 7. Ce premier logement 21 est ménagé à travers une platine 22, qui est logée dans l'espace délimité par l'embout 4 correspondant. Un premier organe secondaire élastiquement déformable 23 coiffe le premier doigt de brochage 20 depuis l'intérieur de l'enceinte 7, pour le contraindre à être maintenu engagé dans le premier logement 21 en situation de blocage spontané de la cartouche en position d'ouverture. Le premier doigt de brochage 20 est accessible depuis l'extérieur de la cartouche après sa traversée de l'embout 4 correspondant. Une poussée exercée volontairement par un quelconque opérateur contre le premier doigt de brochage 20 provoque son déplacement axial à l'encontre de la poussée axiale antagoniste exercée par le premier organe secondaire élastiquement déformable 23 contre le premier doigt de brochage 20. Le déplacement volontaire du premier doigt de brochage 20 induit son dégagement hors du premier logement 21, avec pour effet de libérer l'organe principal à déformation élastique 14 de sa mise sous contrainte en position d'ouverture de la cartouche 1. L'accès libre au premier doigt de verrouillage 20 depuis l'extérieur de la cartouche permet de faciliter sa manutention par une installation automatisée comportant un organe de manoeuvre du premier doigt de brochage 20 simplement agencé en tige ou analogue. Un tel premier ensemble de verrouillage 18 constitue en outre des premiers moyens de positionnement relatif entre le réceptacle 8 et l'enceinte 7 en position d'ouverture de la cartouche 1, pour contrôler une mise en superposition correcte des fenêtres latérales 9,10 l'une sur l'autre.

Le deuxième ensemble de verrouillage 19 constitue des moyens de blocage du réceptacle 8 en position de fermeture de la cartouche 1. Ce deuxième ensemble de verrouillage 19 associe un deuxième doigt de brochage 24 coopérant avec un deuxième logement 25 que comporte l'enceinte 7. Ce deuxième logement 25 est logé dans l'espace délimité par l'embout 3 correspondant. Un deuxième organe secondaire élastiquement déformable 17 prend appui contre le deuxième doigt de brochage 24 depuis l'intérieur de l'enceinte 7, pour le contraindre axialement à être maintenu engagé dans le deuxième logement 25, en situation de blocage spontané de la cartouche en position de fermeture. Sous l'effet du déplacement du loquet 16 par la serrure 15, le loquet 16, en début de course, induit une traction axiale sur le deuxième organe secondaire élastiquement déformable 25 pour libérer le deuxième doigt de brochage 24 de sa prise à l'intérieur du deuxième logement 25. Le deuxième doigt de brochage 24 étant dégagé du deuxième logement 25. Le réceptacle 8 est déverrouillé. Le loquet 16 peut alors être manoeuvré en rotation jusqu'en fin de course par la serrure 15 pour prendre appui contre la gâche 17 afin d'entraîner le réceptacle 8 en position d'ouverture de la cartouche 1. Un tel deuxième ensemble de verrouillage 19 constitue en outre des deuxièmes moyens de positionnement relatif entre le réceptacle 8 et l'enceinte 7 en position de fermeture de la cartouche 1, à l'encontre d'une libération et d'un développement excessifs de l'organe principal à déformation élastique 14. La butée 8, coopérant avec la découpe 29 limite également les degrés de liberté entre l'enceinte et le réceptacle.

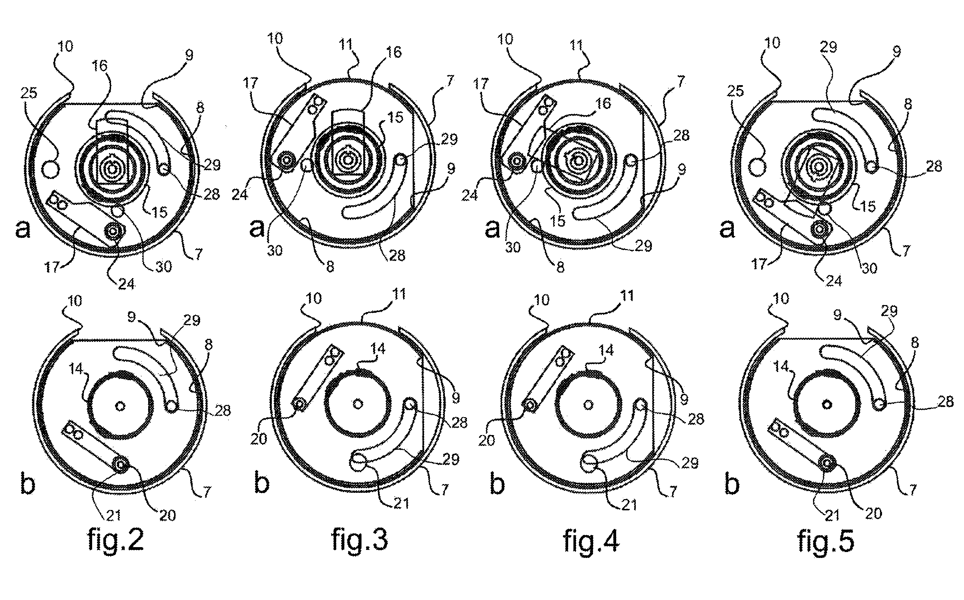

Pour illustrer sur une même figure les organes structurels que comprennent chacun des ensembles de verrouillage 18,19, ceux-ci sont représentés en décalage angulaire de 90° l'un par rapport à l'autre. Les positions relatives réelles des ensembles de verrouillage sont représentées sur les figures 2 à 5.

Sur la figure 2, la cartouche 1 est en position d'ouverture, et les fenêtres latérales 9,10 sont placées en superposition. L'organe principal élastiquement déformable 14 est placé sous tension, sa libération étant interdite par le premier doigt de verrouillage 20 qui est solidaire du réceptacle 8 et qui est en prise sur l'enceinte 7 dans le logement 21. Cette prise est obtenue sous l'effet de la poussée axiale exercée par le premier organe secondaire élastiquement déformable 23 contre le premier doigt de brochage 20. Un déplacement relatif entre le réceptacle 8 et l'enceinte 7 est interdit pour maintenir la cartouche 1 en position d'ouverture en vue de son remplissage et de sa vidange commodes.

Sur la figure 3, une poussée exercée volontairement par un opérateur sur le premier doigt de verrouillage 20 induit son dégagement hors du premier logement 21 à l'encontre de la poussée exercée spontanément par le premier organe secondaire élastiquement déformable 23. Ce dégagement provoque la libération de l'organe principal élastiquement déformable 14 avec pour effet d'entraîner le réceptacle 8 en position de fermeture de la cartouche 1. Le deuxième doigt de brochage 24 est spontanément placé en prise sur l'enceinte sous l'effet de la poussée axiale exercée par le deuxième organe secondaire élastiquement déformable 26 contre le deuxième doigt de brochage 24, pour interdire une manoeuvre de la cartouche 1 en position d'ouverture sans manoeuvre de la serrure 15. En position de fermeture de la cartouche, l'organe d'obturation 11 est placé en superposition sur la première fenêtre latérale 9.

Sur la figure 4, la serrure 15 est manoeuvrée à mi-course et le loquet 16 est entraîné en rotation vers la gâche 17. La mise en prise du loquet 16 contre la gâche 17 provoque une traction sur le deuxième organe secondaire élastiquement déformable 26, pour libérer le deuxième doigt de brochage 24 de la poussée axiale qu'il exerce contre lui. Cette libération induit un dégagement du deuxième doigt de brochage 24 hors du deuxième logement 25, pour permettre un entraînement en rotation du réceptacle 8 à partir d'une manoeuvre de la serrure 15 et de l'appui que prend le loquet 16 contre la butée 30 solidaire du réceptacle.

Sur la figure 5, le réceptacle 8 est entraîné en rotation par le loquet 16 à partir de l'appui que ce dernier prend contre la butée 30, jusqu'à placer la cartouche 1 en position d'ouverture. Dans cette position, le premier doigt de brochage 20 est spontanément placé en prise sur l'enceinte 7 pour bloquer la cartouche 1 en position d'ouverture. Le loquet 16 peut être manoeuvré par la serrure 15 avant retrait de la clé utilisée pour sa manoeuvre, pour placer la cartouche 1 en position initiale représentée sur la figure 1.

## Revendications

1. Cartouche (1) axialement étendue de convoyage pneumatique d'objets, cette cartouche (1) comprenant un corps tubulaire (2) qui ménage un réceptacle (8) des objets à convoyer muni d'une première fenêtre latérale (9) d'accès à son volume intérieur, la cartouche (1) comportant un organe d'obturation (11) et des moyens de manoeuvre de la cartouche (1) en position d'ouverture et inversement de fermeture, dans laquelle :
- le réceptacle (8) est logé axialement tournant à l'intérieur d'une enceinte (7) coaxiale, qui forme une paroi extérieure de la cartouche (1) et qui est munie d'une deuxième fenêtre latérale (10) d'accès au volume intérieur du réceptacle (8), le dit organe d'obturation (11) étant formé par une portion de paroi de ladite enceinte (7) ;
- les moyens de manoeuvre de la cartouche (1) comprennent des moyens d'entraînement spontané (12) du réceptacle (8) en rotation vers la position de fermeture de la cartouche (1), et des moyens d'entraînement volontaire (13) en rotation du réceptacle (8) par un opérateur vers la position d'ouverture de la cartouche (1), **caractérisée en ce que** :
- les moyens d'entraînement volontaire (13) du réceptacle (8) en position d'ouverture de la cartouche (1) comprennent une serrure (15) de manoeuvre d'un loquet (16) qui est en prise sur l'enceinte (7) et qui coopère avec une gâche (17) et une butée (30) en prise sur le réceptacle (8).

2. Cartouche selon la revendication 1, **caractérisée en ce que** les moyens de manoeuvre de la cartouche (1) sont des moyens de mise en rotation et de positionnement relatif du réceptacle (8) et de l'enceinte (7) l'un par rapport à l'autre, entre deux positions stables correspondantes respectivement aux positions de fermeture et d'ouverture de la cartouche (1).

3. Cartouche selon la revendication 1 ou 2, **caractérisée en ce que** les moyens d'entraînement spontané (12) du réceptacle en position de fermeture de la cartouche (1) comprennent au moins un organe principal élastiquement déformable (14) qui est en prise sur l'enceinte (7) et sur le réceptacle (8) entre lesquels il est interposé.

4. Cartouche selon l'une quelconque des revendications précédentes, **caractérisée en ce qu'**elle est équipée de moyens de retenue du réceptacle (8) en position d'ouverture de la cartouche (1) à l'encontre de son entraînement spontané en position de fermeture de la cartouche (1).

5. Cartouche selon l'une quelconque des revendications précédentes, **caractérisée en ce qu'**elle est équipée de moyens de positionnement et de blocage relatifs entre le réceptacle (8) et l'enceinte (7) en chacune des dites positions d'ouverture et de fermeture de la cartouche (1).

6. Cartouche selon la revendication précédente, **caractérisée en ce que** les dits moyens de positionnement et de blocage comprennent au moins un ensemble de verrouillage (18,19) associant un doigt de brochage (20,24) coopérant avec un logement (21,25), qui sont respectivement ménagés indifféremment sur le réceptacle (8) et sur l'enceinte (7).

7. Cartouche selon la revendication précédente, **caractérisée en ce que** le doigt de brochage (20,24) est manoeuvrable entre une position spontanée de blocage dans laquelle le doigt de brochage (20,24) est engagé à l'intérieur du logement (21,25) et une position volontaire de déblocage par un opérateur dans laquelle le doigt de brochage (20,24) est placé hors du logement (21,25).

8. Cartouche selon les revendications 4 et 7, **caractérisée en ce que** les dits moyens de retenue sont constitués d'un premier ensemble de verrouillage (18) comprenant :
- un premier doigt de brochage (20) qui est en prise sur le réceptacle (8), et un premier logement (21) que comporte l'enceinte (7),
- un premier organe secondaire à déformation élastique (23) qui est interposé entre le premier doigt de brochage (20) et le réceptacle (8), et qui provoque un passage spontané du premier doigt de brochage (20) vers la position de blocage en position d'ouverture de la cartouche (1), et
**en ce que** le premier doigt de brochage (20) est accessible depuis l'extérieur de la cartouche (1), sa manoeuvre en position de déblocage étant réalisée par poussée à l'encontre d'un effort axial appliqué par le premier organe secondaire à déformation élastique (23) sur le premier doigt de brochage (20).

9. Cartouche selon la revendication 7, **caractérisée en ce qu'**elle est équipée d'un deuxième ensemble de verrouillage (19) comprenant :
- un deuxième doigt de brochage (24) qui est en prise sur le réceptacle (8), et un deuxième logement (25) que comporte l'enceinte (7),
- un deuxième organe secondaire à déformation élastique (26) qui est interposé entre le deuxième doigt de brochage (24) et le réceptacle (8), et qui provoque un passage spontané du deuxième doigt de brochage (24) vers la position de blocage en position de fermeture de la cartouche (1), et
**en ce que** le deuxième doigt de brochage (24) est manoeuvrable par la serrure (15) vers la position de déblocage à l'encontre d'un effort axial appliqué par le deuxième organe secondaire à déformation élastique (26) sur le deuxième doigt de brochage (24).

10. Cartouche selon l'une quelconque des revendications précédentes, **caractérisée en ce que** l'enceinte (7) comporte à chacune de ses extrémités axiales des embouts respectifs (3,4) de guidage de la cartouche (1), qui reçoivent en rotation libre les extrémités correspondantes du réceptacle (8) et qui logent les moyens de manoeuvre de la cartouche (1).

11. Cartouche selon la revendication précédente, **caractérisée en ce que** la serrure (15) et l'organe principal à déformation élastique (14) sont logés dans un embout respectif (3,4) en étant disposés coaxiaux à la cartouche (1), et **en ce que** le premier ensemble de verrouillage (18) est situé dans l'embout (4) logeant l'organe à déformation élastique (14) tandis que le deuxième ensemble de verrouillage (19) est situé dans l'embout (3) logeant la serrure (15).

12. Procédé de mise en oeuvre d'une cartouche selon l'une quelconque des revendications précédentes, **caractérisé en ce qu'**il comprend une étape qui consiste à libérer l'accès au volume intérieur du réceptacle (8) et inversement à confiner le volume intérieur du réceptacle (8) à partir d'une manoeuvre en rotation coaxiale de l'un quelconque au moins du réceptacle (8) et de l'enceinte (7) l'un par rapport à l'autre, et dans lequel on entraîne le réceptacle (8) en rotation depuis la position de fermeture vers la position d'ouverture de la cartouche (1) au moyen de la serrure (15), le déplacement du loquet (16) provoquant le passage du deuxième doigt de brochage (24) depuis la position de blocage vers la position de déblocage et entraînant le réceptacle (8) en rotation à partir de l'appui que prend le loquet (16) sur la gâche (17).

13. Procédé selon la revendication 12, **caractérisé en ce qu'**il comprend un entraînement spontané du réceptacle (8) en rotation depuis la position d'ouverture vers la position de fermeture de la cartouche (1) au moyen de l'organe principal à déformation élastique (14), à partir d'une manoeuvre du premier doigt de brochage (20) depuis la position de blocage vers la position de déblocage.

14. Procédé selon l'une quelconque des revendications 12 à 13, caractérisé en comprenant les étapes qui consistent :
- à bloquer en position stable le réceptacle (8) à l'intérieur de l'enceinte (7) en chacune des positions d'ouverture et de fermeture de la cartouche (1), et
- à provoquer une rupture volontaire de ces blocages, respectivement par un quelconque opérateur pour libérer l'organe principal à déformation élastique (14) provoquant spontanément le passage de la cartouche (1) en position de fermeture, et par un opérateur autorisé par l'intermédiaire de la serrure (15) pour entraîner le réceptacle (8) vers la position d'ouverture de la cartouche (1).

## Patentansprüche

1. Eine in axialer Richtung gestreckte Büchse (1) zum pneumatischen Transport von Gegenständen, wobei die Büchse (1) aus einem rohrförmigen Körper (2) besteht, in dem ein Behältnis (8) für die zu transportierenden Gegenstände angeordnet ist, das ein seitliches Fenster (9) zum Zugang zu seinem Innenraum besitzt, wobei die Büchse (1) ein Verschlussorgan (11) und Handhabungsvorrichtungen für die Büchse (1) sowohl für die geöffnete Position, als auch die geschlossene Position besitzt, wobei:
- das Behältnis (8) axial drehbar im Inneren einer koaxialen Kammer (7) angeordnet ist, die die äußere Hülle der Büchse (1) bildet und für den Zugang zum Innenraum des Behältnisses (8) mit einem zweiten seitlichen Fenster (10) versehen ist, wobei das Verschlussorgan (11) durch einen Teil der Wandung der betreffenden Kammer (7) gebildet wird,
- die Handhabungsvorrichtungen für die Büchse (1) sowohl Mittel (12) zum selbsttätigen Drehen des Behältnisses (8) in Richtung der Schließposition der Büchse (1), als auch Mittel (13) zum durch einen Bediener gesteuerten Drehen des Behältnisses (8) in die Öffnungsposition der Büchse (1) besitzen, **gekennzeichnet dadurch,**
- **dass** die Mittel (13) zum gesteuerten Drehen des Behältnisses (8) in die Öffnungsposition der Büchse (1) ein Schloss (15) zur Handhabung eines Riegels (16) besitzen, der in die Kammer (7) eingreift und mit einem an dem Behältnis (8) angebauten Streichblech (17) und einem Anschlag (30) zusammenwirkt.

2. Büchse gemäß Patentanspruch 1, **gekennzeichnet dadurch, dass** die Handhabungsmittel der Büchse (1) Mittel zur Einleitung einer Drehbewegung und zur relativen Positionierung des Behältnisses (8) und der Kammer (7) zueinander zwischen zwei stabilen Positionen besitzt, die den Schließ- und Öffnungspositionen der Büchse (1) entsprechen.

3. Büchse gemäß Patentanspruch 1 oder 2, **gekennzeichnet dadurch, dass** die selbsttätigen Antriebsmittel (12) des Behältnisses in Schließposition der Büchse (1) mindestens ein elastisch verformbares Hauptorgan (14) besitzen, das zwischen der Kammer (7) und dem Behältnis (8) angeordnet und mit diesen verbunden ist.

4. Büchse gemäß einem der vorstehenden Patentansprüche, **gekennzeichnet dadurch, dass** sie mit Vorrichtungen versehen ist, welche das Behältnis (8) in Öffnungsposition der Büchse (1) halten und sich der selbsttätigen Bewegung in die Schließposition der Büchse (1) widersetzen.

5. Büchse gemäß einem der vorstehenden Patentansprüche, **gekennzeichnet dadurch, dass** sie mit Vorrichtungen zum relativen Positionieren und Blockieren zwischen dem Behältnis (8) und der Kammer (7) in jeder der genannten Öffnungs- und Schließpositionen der Büchse (1) versehen ist.

6. Büchse gemäß vorstehendem Patentanspruch, **gekennzeichnet dadurch, dass** die Positionierungs- und Blockiervorrichtungen mindestens eine Verriegelungs-Baugruppe (18, 19) besitzen, bestehend aus einem Verriegelungsstift (20, 24), der mit einer Aufnahme (21, 25) zusammenwirkt, die nach Belieben in dem Behältnis (8) und in der Kammer (7) oder umgekehrt montiert werden können.

7. Büchse gemäß vorstehendem Patentanspruch, **gekennzeichnet dadurch, dass** der Verriegelungsstift (20, 24) zwischen einer selbsttätigen Verriegelungsposition, in der der Verriegelungsstift (20, 24) in die Aufnahme (21, 25) eingreift, und einer von einem Bediener gesteuerten Entriegelungsposition, in der der Verriegelungsstift (20, 24) außerhalb der Aufnahme (21, 25) platziert ist, bewegt werden kann.

8. Büchse gemäß einem der Patentansprüche 4 und 7, **gekennzeichnet dadurch, dass** die Rückhaltemittel aus einer ersten Verriegelungs-Baugruppe (18) bestehen, mit:
- einem ersten Verriegelungsstift (20), der in dem Behältnis (8) im Eingriff ist, und einer ersten Aufnahme (21) in der Kammer (7),
- einem ersten sekundären, elastisch verformbaren Organ (23), das zwischen dem ersten Verriegelungsstift (20) und dem Behältnis (8) angeordnet ist und das selbsttätige Bewegen des ersten Verriegelungsstifts (20) aus der Verriegelungsposition in Öffnungsposition der Büchse (1) bewirkt
und darin, dass der erste Verriegelungsstift (20) von außerhalb der Büchse (1) zugänglich ist, wobei seine Bewegung in die Entriegelungsposition durch Drücken in entgegengesetzter Richtung zu einer vom ersten sekundären, elastisch verformbaren Organ (23) auf den ersten Verriegelungsstift (20) aufgebrachten Axialkraft erfolgt.

9. Büchse gemäß Patentanspruch 7, **gekennzeichnet dadurch, dass** sie eine zweite Verriegelungs-Baugruppe (19) besitzt, mit:
- einem zweiten Verriegelungsstift (24), der in dem Behältnis (8) im Eingriff ist, und einer zweiten Aufnahme (25) in der Kammer (7),
- einem zweiten sekundären, elastisch verformbaren Organ (26), das zwischen dem zweiten Verriegelungsstift (24) und dem Behältnis (8) angeordnet ist und das selbsttätige Bewegen des zweiten Verriegelungsstifts (24) in die Verriegelungsposition in Schließposition der Büchse (1) bewirkt und darin, dass der zweite Verriegelungsstift (24) von dem Riegel (15), entgegen einer vom zweiten sekundären, elastisch verformbaren Organ (26) auf den zweiten Verriegelungsstift (24) aufgebrachten Axialkraft in die Entriegelungsposition bewegt werden kann.

10. Büchse gemäß einem der vorstehenden Patentansprüche, **gekennzeichnet dadurch, dass** die Kammer (7) an beiden axialen Enden zum Führen der Büchse (1) Endstücke (3, 4) besitzt, in die die entsprechenden Enden des Behältnisses (8) frei drehbar eingreifen und die die Handhabungsvorrichtungen der Büchse (1) aufnehmen.

11. Büchse gemäß vorstehendem Patentanspruch, **gekennzeichnet dadurch, dass** der Riegel (15) und das primäre, elastisch verformbare Organ (14) in einem zugehörigen Endstück (3, 4) eingelassen und koaxial zur Büchse (1) angeordnet sind, sowie dadurch, dass sich die erste Verriegelungs-Baugruppe (18) im Endstück (4) befindet, das auch das elastisch verformbare Organ (14) enthält, während sich die zweite Verriegelungs-Baugruppe (19) im Endstück (3) befindet, das den Riegel (15) aufnimmt.

12. Verfahren zum Einsatz einer Büchse gemäß einem der vorstehenden Patentansprüche **gekennzeichnet dadurch, dass** der Zugang zum Innenraum des Behältnisses (8) in einem Verfahrensschritt freigegeben wird, und dass, umgekehrt, der Innenraum des Behältnisses (8) durch eine koaxiale, zueinander relative Drehung entweder des Behältnisses (8) oder der Kammer (7) oder beider Elemente nach außen abgeschlossen wird, wobei sich das Behältnis (8) mit dem Riegel (15) von der Schließposition in die Öffnungsposition der Büchse (1) dreht, wobei durch die Bewegung des Riegels (16) der zweite Verriegelungsstift (24) von der Verriegelungsposition in die Entriegelungsposition geführt und das Behältnis (8) gedreht wird, sobald der Riegel (16) auf dem Streichblech (17) aufliegt.

13. Verfahren gemäß Patentanspruch 12, **gekennzeichnet dadurch, dass** es eine selbsttätige Drehbewegung des Behältnisses (8) von der Öffnungsposition in die Schließposition der Büchse (1) durch ein primäres, elastisch verformbares Organ (14) umfasst, die mit einer Bewegung des ersten Verriegelungsstifts (20) von der Verriegelungsposition aus in die Entriegelungsposition beginnt.

14. Verfahren gemäß einem der Ansprüche 12 bis 13, **gekennzeichnet dadurch, dass** es folgende Schritte umfasst:
- Blockieren des Behältnisses (8) in der Kammer (7) in jeder der beiden Öffnungs- und Schließpositionen der Büchse (1) in einer stabilen Position und
- das gesteuerte Aufheben dieser Blockierungen, entweder durch einen beliebigen Bediener, um das primäre, elastisch verformbare Organ (14) freizugeben, wodurch die Bewegung der Büchse (1) in die Schließposition selbsttätig ausgelöst wird, oder durch einen befugten Bediener mit Hilfe des Riegels (15), wodurch das Behältnis (8) in die Öffnungsposition der Büchse (1) bewegt wird.

## Claims

1. A cartridge (1) extended axially for use in a pneumatic system for conveying objects, this cartridge (1) comprising a tubular body (2) in which is contained a receptacle (8) receiving objects to be convoyed, equipped with a first side window (9) providing access to its inner chamber, the cartridge (1) comprising a closing element (11) and means for operating the cartridge (1) in an open position and inversely in a closed position, wherein:
- the receptacle (8) is housed axially so as to turn inside a coaxial enclosure (7) which forms an outer wall of the cartridge (1) and which is equipped with a second side window (10) providing access to the inner chamber of the receptacle (8), the said closing element (11) being formed by a portion of the wall of the said enclosure (7);
- the means for operating the cartridge (1), comprising means (12) for spontaneously rotating the receptacle (8) in the direction of the cartridge (1) closed position, and means (13) for intentionally rotating the receptacle (8) towards the open position of the cartridge (1) by an operator, **characterized in that**:
- the means (13) for intentionally rotating the receptacle (8) with the cartridge (1) in the open position comprises a lock (15) for operating a latch (16) on the enclosure (7) which co-acts with a trigger (17) and a stop (30) engaging on the receptacle (8).

2. A cartridge according to claim 1, **characterized in that** the means for operating the cartridge (1) are means for rotating and positioning the receptacle (8) and the enclosure (7) relative to one another, between two stable positions corresponding respectively to the closed and open positions of the cartridge (1).

3. A cartridge according to claim 1 or 2, **characterized in that** the means (12) for spontaneously rotating the receptacle so that the cartridge (1) is in the closed position comprise at least one elastically deformable main member (14) which is in contact with the enclosure (7) and the receptacle (8), between which it is interposed.

4. A cartridge according to any one of the preceding claims, **characterized in that** it is equipped with means for retaining the receptacle (8) with the cartridge (1) in the open position so as to oppose its spontaneous movement in the closed position.

5. A cartridge according to any one of the preceding claims, **characterized in that** it is equipped with means for positioning and blocking the receptacle (8) and the enclosure (7) in each of the said open and closed positions of the cartridge (1).

6. A cartridge according to the preceding claim, **characterized in that** the said positioning and blocking means comprise at least one blocking assembly (18, 19) associating a finger (20, 24) co-acting with a housing (21, 25), fitted indifferently on the receptacle (8) and the enclosure (7) respectively.

7. A cartridge according to the preceding claim, **characterized in that** the finger (20, 24) can be operated between a spontaneous blocked position wherein the finger (20, 24) is engaged inside the housing (21, 25) and a position for intentional release by an operator wherein the finger (20, 24) is located outside the housing (21,25).

8. A cartridge according to claims 4 and 7, **characterized in that** the said means for retaining consist of a first blocking assembly (18) comprising:
- a first finger (20) which is in contact with the receptacle (8), and a first housing (21) that is enclosed in the enclosure (7),
- a first secondary elastic deformable device (23) which is interposed between the first finger (20) and the receptacle (8) and causes spontaneous movement of the first finger (20) towards the position blocking the cartridge (1) in the open position, and **in that** the first finger (20) is accessible from outside the cartridge (1), its operation in the release position being generated by a thrust against an axial force of the first secondary elastically deformable device (23) acting on the first finger (20).

9. A cartridge according to claim 7, **characterized in that** it is equipped with a second blocking assembly (19) comprising:
- a second finger (24) which is in contact with the receptacle (8), and a second housing (25) which is enclosed in the enclosure (7),
- a secondary elastically deformable device (26) which is interposed between the second finger (24) and the receptacle (8) and which causes the spontaneous passage of the second finger (24) in the direction of the closed cartridge (1) blocked position, and **in that** the second finger (24) can be operated by the lock (15) in the direction of the position that is released against an axial force applied by the second secondary elastically deformable member (26) on the second finger (24).

10. A cartridge according to any one of the preceding claims, **characterized in that** the enclosure (7) comprises at each of its axial ends the respective connectors (3, 4) guiding the cartridge (1) which receive the corresponding freely rotating ends of the receptacle (8) and which houses the means for operating the cartridge (1).

11. A cartridge according to the preceding claim, **characterized in that** the lock (15) and the main elastically deformable member (14) are housed in a respective end piece (3, 4) arranged coaxially to the cartridge (1), and that the first locking assembly (18) is situated in the end piece (4) housing the elastically deformable member (14), whereas the second locking assembly (19) is located in the end piece (3) housing the lock (15).

12. Method for using a cartridge according to any one of the preceding claims, **characterized in that** it comprises a stage consisting in releasing access to the inner chamber of the receptacle (8) and inversely, in enclosing the inner volume of the receptacle (8) by a coaxial rotational movement of either the receptacle (8) or the enclosure (7) relative to one another, and wherein the receptacle (8) is rotated from the closed position to the open position of the cartridge (1) by means of the lock (15), movement of the latch (16) causing the second finger (24) to pass from the blocked position to the released position and rotating the receptacle (8) by the latch (16) pressing on the trigger (17).

13. A method according to claim 12, **characterized in that** it comprises spontaneous rotation of the receptacle (8) from the open position of the cartridge (1) to the closed position using the main elastically deformable member (14), by moving a first finger (20) from the blocking position to the release position.

14. A method according to any one of claims 12 to 13, **characterized in that** it includes stages which consisted in:
- blocking the receptacle (8) inside the enclosure (7) in each one of the cartridge (1) open and closed positions, and
- causing intentional release of these blockages respectively by any operator releasing the main elastically deformable body (14 thereby causing the cartridge (1) to pass spontaneously to the closed position, and by an operator authorized by the lock (15) to move the receptacle (8) to the closed position of the cartridge (1).
